# EUROPEAN PATENT SPECIFICATION

(11) **EP 1 843 876 B1**
(45) Date of publication and mention of the grant of the patent: **11.03.2009**
(21) Application number: 05778744.2
(22) Date of filing: 08.08.2005
(51) Int. Cl.: B25J 19/00

(54) **MEASURING DEVICE MADE OF AN OPEN KINEMATIC CHAIN ABLE TO BE TURNED INTO A POSITIONING ROBOT**
ALS POSITIONIERROBOTER AUSFÜHRBARE MESSVORRICHTUNG AUS EINER OFFENEN KINEMATISCHEN KETTE
APPAREIL DE MESURE CONSTITUE D'UNE CHAINE CINEMATIQUE OUVERTE, POUVANT SE TRANSFORMER EN UN ROBOT DE POSITIONNEMENT

(30) Priority: 09.08.2004 IT CS20040010; 28.06.2005 IT CS20050010
(43) Date of publication of application: 17.10.2007
(73) Proprietor: Calabrian High Tech S.r.l., 87036 Rende (IT)
(72) Inventor: DANIELI, Guido A., I-87036 Rende (IT)
(86) International application number: PCT/IT2005/000487
(87) International publication number: WO 2006/016391

(56) References cited:
- WO-A-03/099152

## Description

The need to reduce ionising radiation absorption from the medical teams during orthopaedic surgeries has induced different firms to propose navigation systems allowing to visualize in Virtual Reality the instrument position with respect to the patient's body structure, on the base of radiographic or CAT initial images. These systems however, particularly suitable to the orthopaedic field, if on the one side supply the doctor a full vision of the operatory scene, eventually indicating on the screen the operations to be performed, on the other side do not supply any physical support to the doctor, that must in any event operate freely to reach the desired objectives. And this may be extremely difficult, since it is in any event necessary to position correctly the instruments, adjusting in the mean time the six degrees of freedom of an object in space. To overcome this problem operatory robots have been proposed that, on the basis of operatory preplanning, do substitute the doctor in operating the necessary resections, needed, for instance, to install a prosthesis. Now it is firm idea of the authors of this patent that the doctor should never be substituted by an equipment. One thing is to suggest, another is to perform a surgery on an human being. Only a doctor may have the experience and sensitivity to understand if a given operation, planned preoperatively on the base of images, is indeed to be performed. This originated the idea to develop a new equipment able to join the two characteristics of Navigator and Robot, changing from one form to another on doctor's request. However, while in the PCT application PCT/IT03/00322 of 27/05/2003, published by WIPO on December 4th 2003 with the publication number WO 03/099152, then transformed into European Patent application EP03730474.8, reference was made only to a system able to compensate the weight acting on the suspended arms after the hinge, transmitting a variable torque that takes into account the actual position of the linkages, in order to allow the operator to move without feeling the weight of the kinematical chain supporting the operatory tools, proposing also to shift from different modes through the insertion/detachment of a system of frontal teeth, in the present application a few important novelties are inserted. First, should the self-balanced kinematic chain present some vertical axes hinges, or if the weight suspended to the structure following is small, then is no longer necessary to provide an active transmission of the torque through the hinge, thus is not necessary to use springs whose tension must continuously updated to connect the two arms of the joint, but is possible to leave it free to rotate, connecting it to the motor only when it must work in Robot mode. In particular the configuration chosen is similar to that presented in patent application EP1109497, but differs strongly since that system was a purely passive one, while Navi-Robot is able to pass from passive to active mode and viceversa. Secondly, to avoid slacks always present in front dentures, and to allow blockage in any position, without having to use too high locking forces, specially designed drum brakes, producing blockage thanks to an enhancement of their self activation characteristics have been used. In presence then of prismatic joints, for which it is also necessary to provide a transition to Robot mode, this may be obtained using a long screw parallel to the joint axis, whose rotational position is controlled by a motor, and by a female screw divided in two halves, that can be closed in robot mode taking care first of rotating the screw, whose angular position is always controlled, as it is the joint's vertical position, in order to close the female screw correctly with respect to the threads of the screw. Naturally a prismatic joint may be counterweighted so as to almost nullify the forces needed to move it vertically.

In order to further simplify the operation of the device, the portion of support of the surgical instrument, previously considered, and provided with further degrees of freedom that could be freed upon doctor's command, has been eliminated and substituted with simple cutting or drilling masks or simple probes, that must be sterilizable. As must be sterilizable also an intermediate element, positioned between the last link and the interchangeable masks, in order to allow substituting the end element without loosing sterility, while the Navi-Robot structure will have to be covered by sterile drapes.

As far as the joints having horizontal axis able to transmit balancing torques, a new hinge configuration is proposed, in which motor and torsion spring are hosted inside the proximal link, while the torques generated are transmitted to the distal link through a couple of bevel gears, in substitution to the endless screw and worm gear used previously. In this case two more brakes are added, one to block motor and reducer, the other to allow direct transmission between motor and distal link, bypassing the torsion spring and eliminating the elastic component. A third brake allows blocking the device configuration, once reached the correct position for the surgical act, in order to eliminate possibile errors caused by the force applied by the doctor.

The use of a unique system of reference is also introduced between patient and device, for every bone to be "treated". Such system may be similar to what described in Patent EP0783276, and consists essentially in a pair of pins to be inserted percutaneously in the bone to be treated. One of the pins may present on the base an enlargement or decrease in section, such to allow positioning in a unique way a special clamp, to be applied on the patient before detecting any X ray or CAT scanning, to be utilized in the pre-pralling surgical phase. The clamp presents also surfaces or reference pins allowing to connect it in a unique way to the Navi-Robot, as well as three spheres of known position with respect to the clamp itself, sufficiently detached in order to allow the unique identification of the position of the patient's bone structure with respect to the clamp, and hence the unique reference to the Navi-Robot.

More arms, presenting a Navi-Robot structure, or a simple Navigator structure (a measuring device) may be added to the first Navi-Robot arm of the device. They must be in any event lockable in any configuration with brakes, that must be applied also on any prismatic joint, for which a solution is also proposed.

Possible applications, in self balancing measuring mode, is the measure of the relative positions in space, in order to reconstruct in Virtual Reality and real time of the surgical field, to substitute fluoroscopy, in robot mode, to be requested by the operator, positioning the equipment to allow, for instance, a precise bone resection by the doctor, that will be allowed to move the saw only in the plane indicated by the robot, positioning the cutting mask in the right place. Plane that the doctor will be able to modify, should he observe, during the surgery, that this modification is necessary. Differently from surgical robot, that tend to substitute the doctor, this is an assistant, that participates upon request to stabilize the operations, never to substitute the doctor, that is and must remain the only responsible of the surgery.

But the applications of these instruments are not exhausted by the orthopaedic sector, nor by the medical, but can be applied every time is useful a measuring device having at least three degrees of freedom, able to assume, upon command, a given precision position.

### Description of the preferred embodiment.

The preferred embodiment of a Navi-Robot is made by at least one self-balanced kinematic chain having at least five degrees of freedom, and able both to block itself in any given position, and to assume a given position, always compatible with its work space.

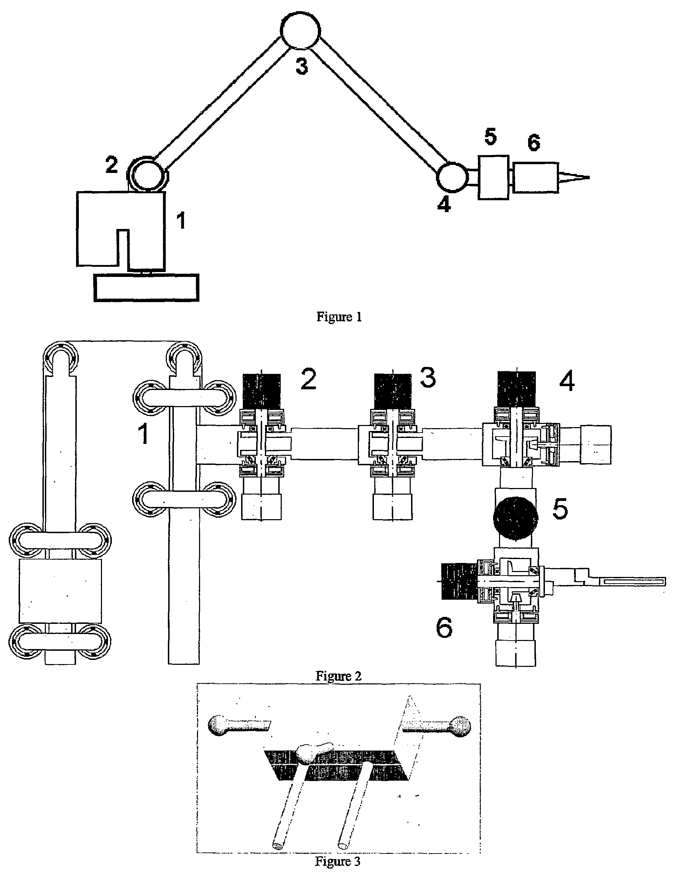

Two the possible configurations of the kinematic chain, of which the first presents a first hinge monitored by an encoder, having vertical axis (1 of Figure 1), on which is mounted, through a second rigid link, a second hinge (2) having horizontal axis, and whose position is again monitored by an encoder, from which a third link departs, at the end of which a third hinge (3) bearing a measuring encoder, having axis horizontal and parallel to the second, from which a fourth link departs, at the end of which a fourth hinge (4) equipped with its encoder and having axis parallel to the last two hinges. This fourth hinge is also the first hinge of the "wrist" of the measuring device, made by two more short links and relative hinges, of which the first (5) presents axis on a plane parallel or passing through the axis of the first encoder, followed by the last hinge (6), having axis, in extended position, perpendicular to the last two being coaxial to the sixth link. Presence of a possible rotating counterweight placed on the first link, that could be mobile on an horizontal rail, in order to balance the weight of the arm as a function of the spatial configuration assumed. The idea of the system is in fact to balance the weight of the structure transmitting to the floor the system weight. Figure 1 shows the first scheme of constraints described.

The second possible kinematic chain of a Navi-Robot derives from that of a SCARA robot, mounted on a first prismatic joint having vertical axis whose weight is balanced by a weight positioned on a second vertical prismatic joint. At the free extremity of the linkage the "wrist" is placed having three axes mutually perpendicular, the first vertical, followd by two horizontal axes mutually perpendicular. Figure 2 shows the second scheme of constraints described.

Note also that, in order to precision position the surgeon's instrument with respect to the patient's body during the surgery, and thus also the correct Virtual Reality representation of the procedure, the system must be locked to the patient through a special reference clamp, as well as to the surgical instrument, not being possible in any event to transfer its weight on the doctor nor, even more obviously, on the patient. In order to obtain this, at least two kinematic chains should be used, unless the total immobility of the patient could allow a self referencing system, utilizing hence a single kinematic chain. But this is unlikely. In particular the referencing clamp (Figure 3) must present an unique identification system both in the image plane (for instance three spheres of known position) and with respect to Navi-Robot.

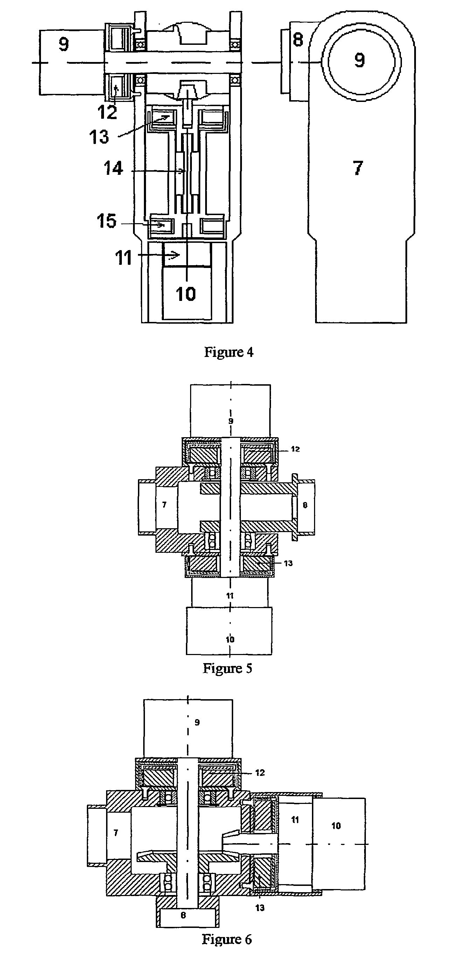

Passing to the description of the typical joints allowing the Navi-Robot behavior, let us start with the one having horizontal axis, thus allowing torque transmission. It is presented in Figure 4, where the proximal (7) and distal (8) link, whose relative position is monitored by an encoder (9), while motor (10), reducer (11) and possible dedicated encoder transmit motion through a couple of bevel gears, of which the driven is fixed to the distal link (8), while the driving il coupled to the torsion spring (14), fixed on the other extreme to the motor. Three brakes are present, one (12) blocking the relative link position, the second (13) blocking the motor (10), not to be forced to keep it on all the time, and the third (15) causing direct power transmission from the motor, bypassing the torque spring.

In the case of hinges having vertical axis, with links aligned, presented in Figure 5, note the presence of only two brakes, one (12), placed under the upper encoder, to block the relative link position (7 and 8), the other (13), placed in diametrically opposed position, connecting the reducer frame to the proximal link (7), while the output shaft of the reducer in always fixed to the distal link (8). Blocking this brake, transition to Robot mode is obtained. Passing to the case of vertical axis hinges, whose distal link axis is inclined by 90°, (Figure 6), note that, differently from the previous case, the motor-reducer group is also rotated by 90°, while mechanical transmission to the following link is ensured by bevel gears.

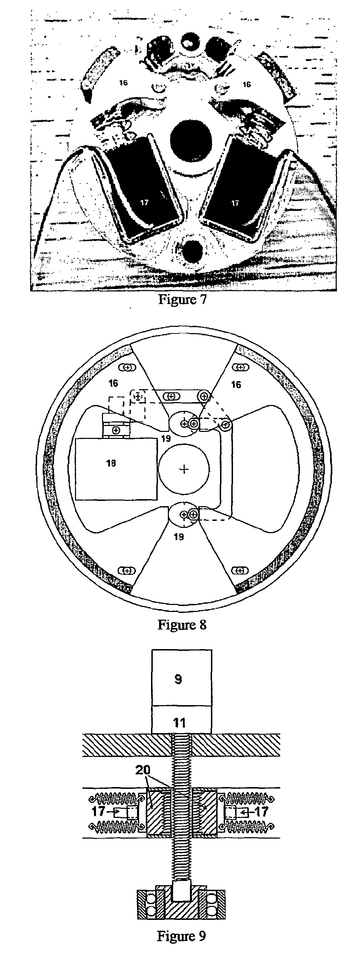

Figure 7 shows a drum brake characterized by tiny shoes (16), activated by solenoids (17), used to allow blockage, while the following Figure 8 shows a different type. Both brakes produce blockage, thanks to the fact that the shoe hinge is positioned very internally, which increments the moment produced by the friction forces, till the condition in which the breaking equilibrium force becomes negative, causing self-blockage, even with relatively low friction coefficients (0,35 in this case). Also notice that blockage occurs in both directions of rotation, being in the first case caused by one shoe only, the left when rotating clockwise, while in the second case, being the hinge a cam, both shoes oppose rotation. Their activation them may be assigned to solenoids, or, more effectively, to electric motors (18) coupled with reducers and endless screw acting on cams (19) for final actuation.

Figure 9 shows the mechanism for blocking and transmitting motion of the vertical joint, actuated by solenoids or electric motors as in the previous case, in which note two halves female screws (20), the step motor placed above the screw, and the actuation system.

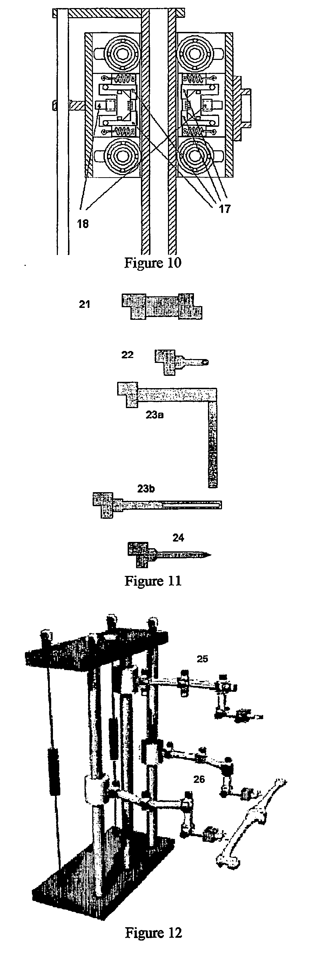

Figure 10 shows instead the linear vertical brake, in which two L shaped shoes (16), computed according to the Reye assumption on wear, to block the joint. Also in this case the locking action is obtained simply bringing in contact the shoes with the lateral joint surfaces.

Figure 11 shows a possible connecting element to the Navi-Robot (21), a drilling mask (22), two cutting masks, for minimally invasive (23a) and traditional (23b) surgery, and finally a measuring probe (24), all sterilizable and automatically recognizable by Navi-Robot. Finally Figure 12 shows a possible configuration of Navi-Robot for Orthopaedy, were (25) indicates the active / passive arm, while (26) indicate the passive ones.

It is worth noting, as already underlined in the previous patent applications, that the object of the patent is an actively or passively self balancing device, allowing real time measurements of the end effectors position with respect to a given reference, able also to become a robot, and to lock itself in any configuration, starting from both Navigator or Robot mode, without needing to pass through the other mode.

Only with such an instrument the doctor may freely move the instrument, characterized by the self balancing system, in proximity of the cutting zone, as indicated by the Augmented Reality representation, and require the transition in Robot mode, that, locking the joints, will assume the correct position for cutting or drilling through the suitable mask, and operate in total safety, being also able to order the system to modify the cutting plane by a given amount, if this would seem necessary to him, knowing that the system will take that into account in all following operations, including the prosthesis component's choice.

The same instrument can also be used with a single 6 DOF kinematic chain, for dimensional controls for the industry, eventually eliminating the locking brakes. Self balancing characteristics and possibility to pass in Robot mode would remain, peculiarities that distinguish this device from any other present on the market.

## Claims

1. Active or passive self-balancing navigator-robot having one or more arms (25, 26), of which at least one having five or six degrees of freedom, the robot being able to be moved passively or to transform itself on command in an active robot, possibly also able to block itself in any configuration, and being composed by a base mounted on wheels lockable on the floor, by a certain number of measuring hinges (1-6) or prismatic joints, the joints being connected by mechanical links (7, 8), and possibly provided with springs whose tension is automatically controlled by motors, in function of the spatial configuration assumed, so as to transmit from one link to the following a torque able to allow maintaining the configuration, **characterized in that** the joints are free but lockable through a system of brakes (12, 13, 15) so that the joints may be actuated by motors.

2. Navigator-Robot as per claim 1 having eighteen degrees of freedom and essentially made of three arms each having 6 DOF of which two are only measuring arms, while the central is active/passive, having the bases reciprocally fixed, to allow the measure of the relative position between two self balanced end effectors, and blockage on request of all DOF, the system being able to measure the relative position between a surgical mask placed on the end effector of the central Robot/measuring arm, and a patient body, fixed to the end effectors of the measuring arms.

3. Navigator-Robot as per claim 1, in which the brakes derive from drum brakes designed to result self locking, the hinge shoe (16) being placed near the center and electrically actuated.

4. Navigator-Robot as per claim 1, in which the end effectors may be fixed in a unique mode through intermediate sterilizable elements to probes or cutting or drilling masks also sterilizable and of known geometry, or the clamps also sterilizable fixed to the patient bone structure and presenting a certain number of spheres of known position, to allow determining a unique referral position with respect to the patient's bone structure, so that it is possible to determine the relative position between any end effector and the patient's bone structure.

5. Navigator-Robot as per claim 1, in which the possible vertical brakes electrically actuated use the same principle of the drum brakes, requiring an activation force to balance the moment generated by friction with respect to that generated by the contact pressure.

6. Navigator-Robot as per claim 1, in which the possible vertical movement is obtained through an endless screw coupled to a relative female screw, divided in two halves (20), through an electric command system, after rotating the screw to bring the threads to coincide.

7. Navigator-Robot as per claim 1, applied to any medical or technical branch.

## Patentansprüche

1. Aktiver oder passiver, selbstausgleichender Navigationsroboter mit einem oder zwei Armen (25, 26), von denen wenigstens einer fünf oder sechs Freiheitsgrade hat, wobei der Roboter passiv bewegt werden oder sich auf Befehl in einen aktiven Roboter umschalten kann und gegebenenfalls auch in der Lage ist, sich in jeder beliebigen Konfiguration zu verriegeln, und wobei dieser Roboter zusammengesetzt ist aus einem Grundgestell, das auf am Boden arretierbaren Rädern gelagert ist, und aus einer bestimmten Anzahl von Messgelenken (1-6) oder Schubgelenken, die über mechanische Zwischenglieder (7, 8) miteinander verbunden sind und vorzugsweise Federn aufweisen, deren Spannung in Funktion von der erreichten räumlichen Konfiguration von Motoren automatisch steuerbar ist, so dass von einem Zwischenglied zum folgenden eine Drehkraft übertragen wird, um die Konfiguration aufrecht zu erhalten, **dadurch gekennzeichnet, dass** die Gelenke frei, jedoch über ein System von Bremsen (12, 13, 15) verriegelbar sind, so dass sie durch Motoren steuerbar sind.

2. Navigationsroboter nach Anspruch 1 mit 18 Freiheitsgraden und mit im wesentlichen drei Armen, von denen jeder 6 DOF hat, von denen zwei nur als Messarme ausgebildet sind, während der mittlere Arm aktiv/passiv ist, wobei die Grundgestelle wechselseitig fest sind, um die Relativstellung zwischen zwei selbstausgleichenden Endstellgliedern zu messen, und alle DOF bei Bedarf blockierbar sind, so dass das System die Relativstellung zwischen einer auf dem Endstellglied des mittleren Roboters/Messarms angeordneten Operationsmaske und einem am Endstellglied der Messarme fixierten Patientenkörper messen kann.

3. Navigationsroboter nach Anspruch 1, bei dem die Bremsen von Trommelbremsen abgeleitet sind, die selbstblockierend ausgelegt sind, wobei der Gelenksattel (16) in der Nähe des Zentrums angeordnet ist und elektrisch betätigt wird.

4. Navigationsroboter nach Anspruch 1, bei dem die Endstellglieder über sterilisierbare Zwisehenelemente in eindeutiger Weise an Sonden, Schneid- oder Bohrschablonen fixierbar sind, welche ebenfalls sterilisierbar sind und eine bekannte Geometrie haben, oder bei dem die ebenfalls sterilisierbaren Klemmen an der Knochenstruktur des Patienten fixierbar sind und eine bestimmte Anzahl von Kugeln bekannter Position haben, um eine eindeutige Referenzposition bezüglich der Knochenstruktur des Patienten bestimmen zu können, so dass die Relativstellung zwischen jedem Endstellglied und der Knochenstruktur des Patienten bestimmt werden kann.

5. Navigationsroboter nach Anspruch 1, bei dem die möglichen vertikalen und elektrisch betätigbaren Bremsen das Prinzip der Trommelbremsen nützen, das eine Aktivierungskraft erfordert, um das durch die Reibung erzeugte Moment zu demjenigen auszugleichen, das durch den Berührungsdruck erzeugt wird.

6. Navigationsroboter nach Anspruch 1, bei dem die mögliche Vertikalbewegung über eine Schnecke, die in eine zugehörige, zweiteilige Schnecke, eingreift, erzeugt wird durch ein elektrisches Steuerungssystem nach einer Drebung der Schnecke, um die Schraubengewinde in Eingriff zu bringen.

7. Navigationsroboter nach Anspruch 1, **gekennzeichnet durch** den Einsatz im medizinischen oder technischen Bereich.

## Revendications

1. Active ou passif navigateur-robot auto équilibrant ayant un ou plusieurs bras, dont au moins un ayant cinq ou six degrés de liberté, le robot pouvant être déplacé passivement ou se transformer sur commande dans un robot actif, possiblement aussi capable de se bloquer dans n'importe quelle configuration, et étant composé par une base monté sur des roues blocables sur le plancher, par un certain nombre de charnières de mesure ou de joints prismatiques, les étant joints reliés par des liaisons mécaniques, et possiblement fournis des ressorts dont la tension est automatiquement commandée par des moteurs, en fonction de la configuration spatiale assumée, afin de transmettre d'un liaison au suivant un couple capable de permettre de maintenir la configuration **caractérisée en ce que** les Joints sont libres mais blocables par un système des freins de sorte que les joints puissent être enclenchés par des moteurs.

2. Navigateur-Robot selon la revendication 1 ayant dix-huit degrés de liberté, et essentiellement fait par trois bras chacun ayant 6 degrés de liberté, dont deux sont seulement des bras de mesure, alors que le bras central est actif/passif, ayant les bases réciproquement fixés, pour permettre la mesure de la position relative entre deux terminaux auto équilibrés, et le blocage sur demande de tout les degrés de liberté, le système pouvant mesurer la position relative entre un masque chirurgical placé sur le terminal du robot central/du bras de mesure, et le corps du patient, fixé aux terminaux des bras de mesure.

3. Navigateur-Robot selon la revendication 1, dans lequel les freins dérivent des freins à tambour prévue pour résulter autobloquant, la portée d'arbre étant placée près du centre et électriquement actionnée.

4. Navigateur-Robot selon la revendication 1, dans lequel les terminaux peuvent être fixés en mode unique par des éléments stérilisables intermédiaires aux sondes ou découpage ou masque de perçage également stérilisables et de géométrie connue, ou des brides également stérilisables fixés à la structure d'os du patient et présentant un certain nombre de sphères de position connue, pour permettre de déterminer une position unique de référence relative à la structure d'os du patient; de sorte qu'il soit possible de déterminer la position relative entre n'importe quel terminal et la structure d'os du patient.

5. Navigateur-Robot selon la revendication 1, dans lequel les possibles freins verticaux, électriquement enclenchés, utilisent le même principe des freins à tambour, exigeant une force d'activation pour équilibrer le moment produit par frottement en ce qui concerne cela produit par la pression de contact.

6. Navigateur-Robot selon la revendication 1, dans lequel le possible mouvement vertical est obtenu par une vis sans fin couplée à une relative vis femelle, divisée dans deux moitiés, par un système électrique de commande, après avoir tourné la vis pour porter les filets à coïncider.

7. Navigateur-Robot selon la revendication 1, appliquée à toute branche de la médicine ou de la technique.
